# EUROPEAN PATENT APPLICATION

(11) **EP 3 174 306 A1**
(43) Date of publication of application: **31.05.2017**
(21) Application number: 15306859.8
(22) Date of filing: 24.11.2015
(51) Int. Cl.: H04N 21/488, H04N 21/434, H04N 5/445, H04N 21/485, H04N 7/088

(54) **AUTOMATIC ADJUSTMENT OF TEXTUAL INFORMATION FOR IMPROVED READABILITY**

(71) Applicant: Thomson Licensing, 92130 Issy-les-Moulineaux (FR)
(72) Inventor: Brocke, Jens, 30880 Laatzen (DE); Pieper, Michael, 30659 Hannover (DE); Li, Hui, 30539 Hannover (DE); Kubsch, Stefan, 31559 Hohnhorst (DE); Weber, Michael, 30559 Hannover (DE); Glaeser, Frank, 30449 Hannover (DE)
(74) Representative: Huchet, Anne

(57) **Abstract**

The readability of textual information, e.g. subtitles, to be displayed together with a video frame shall be improved. Therefore, there is provided a method for automatically performing the steps of detecting (S1) a first part of the video frame to be displayed on the playback device (1), the first part belonging to a component of a graphical representation of the textual information to be displayed on the playback device (1), and adjusting (S4) at least the component of the graphical representation in accordance with a value of a formatting parameter.

## Description

### Technical field

The present invention relates to a method of displaying textual information together with a video frame on a playback device. Furthermore, the present invention relates to such playback device.

### Background

For a lot of audiovisual (A/V) content, textual information describing the audio part of the content by means of subtitles or captions is available, either to obey legal regulations or for convenience of the viewer. Captions and subtitles for the deaf and hard of hearing (SDH) contain textual information on the spoken dialog, lyrics, music, sound effects, and similar, to make the A/V content accessible to hearing-impaired viewers. Regular subtitles usually contain transcripts of the dialog only, either in the same language as the main spoken dialog or as translation to a different language. More special uses of subtitles are not related to the audio content but present other context, background or supplemental information on the A/V context.

Subtitles or captions (hereinafter also "subtitles/captions" or shortly "subtitles") are textual information which is presented in synchronization with the A/V content. There are 3 main techniques to achieve this. Open (or hard) subtitles/captions are fully integrated into the video frames; hence they cannot be switched off. In contrast, closed subtitles/captions can be switched on and off by the viewer; these come in two flavors. Pre-rendered subtitles/captions are renderings of the textual information prepared by the author of the A/V content as graphics which overlay the video frames during presentation. Soft subtitles/captions are instead actively rendered by the playback device during presentation, according to special information associated with the A/V content. Such information must at least comprise the subtitle/caption text and its presentation timing, but may also include formatting information.

Formatting options (i.e. formatting parameters) for subtitles/captions include (non-exhaustive):
- Font, style (bold, italic, etc.), color, transparency, size, position and orientation (left-aligned, centered, etc.) of the actual text;
- Use, width, color and transparency of text outlines;
- Use, style, width, color and transparency of text shadows;
- Use, size, color and transparency of text character background or whole text window;
- Use and type of text animations (scrolling, re-coloring, fade-in, fade-out, etc.), maybe in synchronization with spoken dialog or sung lyrics;
- Use of additional graphic effects or animations (e.g. bouncing ball for karaoke).

Hard subtitles/captions can be flexibly formatted and can reach high quality as they can utilize the full color space and resolution of the main video content. Pre-rendered ones can also be flexibly formatted but may lack quality depending on the used graphics format and restrictions on its technical parameters like resolution, color space, number of colors, etc., the latter to reduce the bandwidth needed for the subtitle/caption graphics stream which adds to the bandwidth of the main video content stream. Formatting of soft subtitles/captions first depends on the formatting options which can be described by the used subtitle/caption information format and second on the rendering capabilities of the playback device for such options. The playback device also determines the quality of the rendering.

A/V systems using soft subtitles/captions often provide functionality to let the viewer choose the subtitle/caption formatting parameters. This is more or less necessary if the used subtitle/caption information format provides no formatting options or fewer than the system can render, but may also be used to override provided formatting parameters disliked by the viewer.

Subtitles/captions can sometimes be hard to read. Some reasons for this are more or less permanent, e.g. a generally improper choice of formatting parameters by the subtitle/caption author, an inconvenient viewing environment (distance from display, lighting conditions, etc.), or visual impairments of the viewer (sharpness of vison, color perception, etc.). To resolve such problems, it is desirable to provide static subtitle/caption reformatting functionality for all types of subtitles/captions instead of for soft ones only. Other readability issues are caused by temporarily insufficient contrast in luminance and/or color between the subtitles/captions and the surrounding main video content. For subtitles/captions provided with rich formatting options, such issues can in principle be avoided by the subtitle/caption author by choosing different formatting parameters for such segments of an A/V content, but this requires more time, skill and budget than choosing a single default formatting suitable for most of the runtime of the A/V content. Moreover, if a suitable formatting cannot be provided by the subtitle/caption information or is overridden by the viewer, temporary subtitle/caption readability issues may occur anyway. Therefore, it is desirable that the playback device detects such issues and automatically performs dynamic adjustments of the subtitle/caption formatting for improved readability during playback of such segments of the A/V content.

Another way to avoid temporary subtitle/caption readability issues is the use of a default subtitle/caption formatting providing good readability regardless of the main video content, like the traditional US closed caption formatting using white characters on opaque black character background, or text with transparent background but using pronounced outlines to contrast with the main video content. However, such formatting is often disliked by viewers as it needlessly occludes parts of the main video content for a majority of the presented subtitles/captions, and it may also not help against some of the permanent subtitle/caption readability issues.
[1] describes functionality for adjustment of the rendering of closed captions (e.g. font size, font type, text/background color), including automatic adjustments of text elements (e.g. font size, line breaks, repositioning) if such adjustments result in spatial conflicts of the text elements. However, the patent is focused on US closed captions (CEA-608/708) which are soft captions most easily adjustable whereas the invention also considers hard and pre-rendered subtitles/captions. The patent mainly considers that the initial adjustment parameters are provided by a viewer, which may cover parts of the static adjustments of the invention, but the automatic adjustment afterwards simply addresses conflicts of the text elements with each other or with their display window, not with the surrounding main video content as the dynamic adjustments of the invention do.
[2] describes the automatic repositioning of text, including subtitles or captions, on a video to unused "black" areas on the display device resulting from mismatches between the aspect ratios of the main video content and the display device (e.g. letterbox rendering of 16:9 content on 4:3 displays), to avoid occlusion of the main video content. This may also include resizing of the moved text or moving the main video content to the edges of the display device to combine unused areas to have more space for the text. The patent therefore requires such unused display space to work, which excludes all cases in which the content is provided in the aspect ratio of the display device. In contrast, the invention focus-ses on subtitle/caption formatting adjustments which improve readability while the text still overlays the main video content, although a viewer may also choose to move the text away from the main video content as a static adjustment if feasible. Furthermore, the patent describes automatic detection of the bounding box of the text but does neither mention text/character recognition nor inpainting techniques, hinting that it would not be applicable to hard subtitles whereas the invention also considers those.

Furthermore, [3] discloses a digital TV receiver for displaying subtitles for elderly people with weak visual acuity. The receiver displays the subtitles with a character size and color set by the broadcasting station site and automatically adjusts size, line thickness, tone, shadow, background color, contrast, brightness and sharpness of characters of subtitles. Thus, a static adjustment is performed for soft subtitles.

The object of the present invention is to further improve the readability of textual information and specifically subtitles or captions.

### Invention

According to the present invention, the above object is solved by a method according to claim 1.

This method of displaying textual information together with a video frame on a playback device includes automatically performing the step of detecting a first part of the video frame to be displayed on the playback device, the first part belonging to a component of a graphical representation of the textual information to be displayed on the playback device. I.e., the video frame is analyzed as to which part of it belongs to a component of the textual information, i.e. which part of the video frame belongs to e.g. a specific character of the textual information. In a subsequent automatic step, at least the component of the graphical representation is adjusted in accordance with a value of a formatting parameter. Thus, for example, a specific format of the subtitle can be selected statically or a minimum contrast level between the textual information and the video frame can be guaranteed dynamically. In the latter case readability is improved.

In case of static adjustment, the value of the formatting parameter is set in advance. For example, the user chooses white or black characters for the subtitles without specific reference to the video frame(s).

In case of dynamic adjustment, the step of detecting a first part is followed by detecting a second part of the video frame surrounding the first part and not belonging to the component of the graphical representation, and the method further includes checking a contrast parameter of the first part against the second part, wherein the formatting parameter is the contrast parameter, and wherein the step of checking includes dynamically determining a value of the contrast parameter and the adjusting is performed such that each value of the contrast parameter exceeds a pre-given value. Thus adjustment can be performed automatically without real time interaction by the user.

Preferably, the textual information is an open subtitle or a closed subtitle. However, the textual information may also be related to any other text superimposing the video frame or being faded in the video frame.

The closed subtitle may be a pre-rendered subtitle or a soft subtitle. This means that the subtitle may be rendered in advance or during playback.

The contrast parameter may relate to luminance or chrominance. I.e. the brightness difference between the textual information and the video frame can be adjusted. Alternatively or additionally, also the color difference between both components can be varied.

In one embodiment, the component of the graphical representation relates to a background of a character, a foreground of a character, an outline of a character or a shadow of a character. All these components affect the visibility of the textual information displayed simultaneously with a video frame.

The method may further include an OCR processing. Such OCR processing may be necessary for initial detection or re-rendering of text components. Further, the OCR can be performed partially in the step of detecting or fully after the step of checking.

Additionally, the step of adjusting the component of the graphical representation may be followed by inpainting of the video frame. Inpainting can be necessary when open subtitles of a pre-given format shall be replaced by subtitles of another format.

The component of the graphical representation of the textual information may be a full subtitle, a single line of a subtitle, a single character of a subtitle or a part of a character of a subtitle. Accordingly, each single part of a subtitle, even single pixels, or the full subtitle can be adjusted dynamically.

In a further favorable embodiment, the step of adjusting is only performed if the contrast parameter is lower than a level configurable by a user of the playback device. Thus, the processing activity is reduced to situations where an improvement of the readability is actually necessary.

In a favorable embodiment, formatting parameter(s) for the graphical representation is/are set manually before the steps of checking and adjusting. This means that prior to dynamically adjusting the textual information, there is performed a static adjustment by the user of the playback device.

The step of checking may be performed repeatedly for a number of video frames of a pre-defined period of time or a pre-defined number of video frames, and the step of adjusting is performed once for the whole number of said frames. Thus, in an exemplary embodiment adjustment can be performed every one second, so that the subtitles are not subjected to spurious flickering.

In a further development the pre-defined period of time corresponds to the whole time of displaying the textual information. For this a video stream segment having the temporal length of the display time of the textual information (i.e. the subtitle sequence) should be buffered in order to check the contrast parameter for the whole video stream segment.

Additionally, the step of checking the component of the graphical representation may be automatically repeated for different types of formatting parameters. Thereby, the sequence of repetition could be configurable variably. For example, the contrast parameter is checked firstly with white characters, yellow characters, blue characters etc. and secondly with black background, white background etc. The sequence of checking different formatting parameters (color of foreground, color of background, brightness, etc.) of the subtitles could be configured freely.

A playback device according to the present invention includes detecting means and adjusting means for performing the corresponding steps of automatically detecting and adjusting and optionally processing means for the step of checking.

The invention is mainly intended for automatic subtitle/caption adjustment for improved readability on playback of A/V content by a playback device in cases when the subtitle/caption formatting causes temporary readability issues due to a lack of contrast in luminance and/or color between the subtitles/captions and the surrounding main video content; this is called dynamic subtitle/caption adjustment. For hard subtitles/captions, the most complex case, this can require detection of which parts of a video frame belong to which component of the subtitles/captions, checking the subtitles/captions against the surrounding main video content for readability issues, sometimes recognition of the actual subtitle/caption text, applying automatic formatting adjustments to the subtitles/captions to improve their readability, and sometimes inpainting of the video frame. For pre-rendered or soft subtitles/captions, some of these processing steps are considerably easier or can even be skipped. The need for and complexity of the processing steps also depend on the kind of subtitle/caption adjustments being performed.

The functionality required for these dynamic subtitle/caption adjustments can also be used for static adjustments of the subtitle/caption formatting on behalf of a viewer according to his preferences, maybe overriding formatting parameters provided by the A/V content. As such static adjustments may cause temporary subtitle/caption readability issues, they should be followed by dynamic adjustments to correct these issues.

The dynamic subtitle/caption adjustments of the invention resolve temporary subtitle/caption readability issues not properly addressed by the original subtitle/caption formatting of an A/V content, caused by overriding subtitle/caption formatting parameters of the A/V content by the viewer, or resulting from subtitle/caption formatting parameter choices by the viewer for parameters not provided by the A/V content. The static subtitle/caption adjustments of the invention extend the use of subtitle/caption formatting customization on behalf of a viewer from its current use for soft subtitles/captions to pre-rendered and hard subtitles/captions. Together, these functionalities may be used to choose a default subtitle/caption formatting that occludes less of the main video content than the original subtitle/caption formatting of an A/V content or the formatting a viewer would normally choose for constantly good readability, relying on the dynamic adjustments to resolve resulting subtitle/caption readability issues.

### Drawings

Exemplary embodiments of the invention are illustrated in the drawings and are explained in more detail in the following description.
- Fig. 1: shows a flow chart of an embodiment of the inventive method of displaying textual information;
- Fig. 2: shows an exemplary embodiment of a playback device according to the present invention.

### Exemplary embodiments

Except for additional graphic effects and animations, most of the subtitle/caption formatting options (formatting parameters) described above may be supported for the static adjustments by a playback device implementing the invention. For the dynamic adjustments, color or transparency changes of text foreground, background, outline and maybe shadows are most suitable as they can effectively resolve the luminance and/or color contrast issues to be addressed by these adjustments without changing the spatial formatting of the subtitles/captions. Adding or broadening of outlines and maybe shadows can also be effective but may be more disturbing to the viewer, especially if re-spacing of the text is required. Finally, changing font type or size, font or shadow style, text orientation or position or even text animation seems to be less effective and more disturbing than the former options.

Some adjustments have higher processing requirements than others (e.g. changing font type/style more than changing text foreground/background color), and these requirements also depend on the subtitle/caption type of an A/V content (e.g. repositioning of a soft or pre-rendered subtitle/caption is way easier than for a hard one, as the originally occluded main video content is available for the former while it must be inpainted for the latter). Therefore, a playback device may support more or less adjustment options depending on its resources and the subtitle/caption type to be adjusted. It may also support different adjustment options for static adjustments than for dynamic ones.

The subtitle/caption adjustments of the invention should be configurable by the user of a playback device implementing the invention. For the dynamic adjustments, the configuration information should include an enable/disable flag, a selection of the subtitle/caption formatting options which should be adjusted, and parameters controlling these adjustments (see below). There may also be a list of adjustment preferences from which the device chooses the one most preferred by the user which is suitable to resolve an occurring temporary readability issue. For the static adjustments, the configuration information should include a default parameter and an override flag for all subtitle/caption formatting options supported by the device. The default parameter is applied on playback of A/V content if the content does not provide that parameter or when the flag indicates that a provided parameter should be overridden. For both the dynamic and static adjustments, there may be multiple sets of configuration information to enable convenient switching between different configurations by the user. Furthermore, there may be multiple sets of configuration information associated with different media and subtitle/caption types so that the device can automatically select a configuration suitable for a specific A/V content being played back.

A dynamic adjustment may be triggered by a lack of contrast in luminance and/or color between the subtitles/captions and the surrounding main video content. As viewers are typically more or less sensitive to such lack, the contrast level triggering the adjustment should be configurable by the viewer. The automatic on/off switching of the adjustment should be performed with some hysteresis (which may be configurable) around this trigger level to avoid too frequent switching when the actual contrast level slightly alternates around the trigger level. Furthermore, there may be a configurable minimum duration during which an adjustment is kept on once activated, unless the subtitle/caption disappears beforehand, to also avoid too frequent switching in case of frequent but pronounced contrast level changes.

An important aspect of the dynamic adjustments may be when and how long a dynamic adjustment should be applied. The least sophisticated solution is to switch an adjustment on when the trigger condition occurs and keep it activated until the condition is no longer fulfilled, also taking the minimum activation duration into account. To ensure that the adjustment does not cause temporary readability issues during its activation period again, a playback device should either choose a subtitle/caption formatting providing good readability regardless of the main video content (see above) or, if the device resources permit, buffer and pre-process the A/V content for at least the minimum adjustment activation duration to be able to choose an adjustment suitable for that duration, with the initial adjustment afterwards either being switched of or replaced by another one suitable for the next duration. Even more buffering and pre-processing will typically be required if an adjustment should be kept activated the full time until a subtitle/caption disappears or even be activated once a subtitle/caption appears for its full display duration if there would be any readability issue during that duration. Depending on its resources, a playback device may support one or multiple of these modes, which should be configurable by the viewer. The supported adjustment activation duration modes may also limit the formatting options supported for the dynamic adjustments due to their different suitability with regard to being applied to a temporal segment of a displayed subtitle/caption only. Color or transparency changes of text foreground, background, outline and maybe shadows are quite acceptable for this, like adding or broadening of outlines and maybe shadows if not causing re-spacing, but changes in font type, size or style would be quite disturbing to most viewers, and repositioning would rather be inacceptable as a subtitle/caption jumping around would be very hard to read.

Another aspect of the dynamic adjustments may be whether they should be spatially applied to a full subtitle/caption being displayed, to at least a full line of a multi-line subtitle/caption, or to more or less the exact areas, like single characters or even parts of them, where readability conflicts with the main video content actually occur. Partial spatial adjustments require more processing and rendering resources than full spatial adjustments, though not to the same extent as the partial temporal ones discussed above, and are also more or less suitable for the various formatting options. Localized color or transparency changes of text foreground, background, outline and maybe shadows are quite acceptable as are localized adding or broadening of outlines and maybe shadows if not causing re-spacing, changes in font type, size or style should preferably be applied on a full-line basis at least, and partial repositioning would rather be inacceptable as it could spread parts of a subtitle/caption all over the display area. Hence a playback device may support one or more of the spatial adjustment extent modes according to its resources and their applicability to the supported formatting options. As the spatial extend of the dynamic adjustments is even more a matter of taste than their temporal extent, the spatial adjustment extent modes and potentially related parameters (e.g. a minimum adjustment area for localized changes) should be configurable by the viewer.

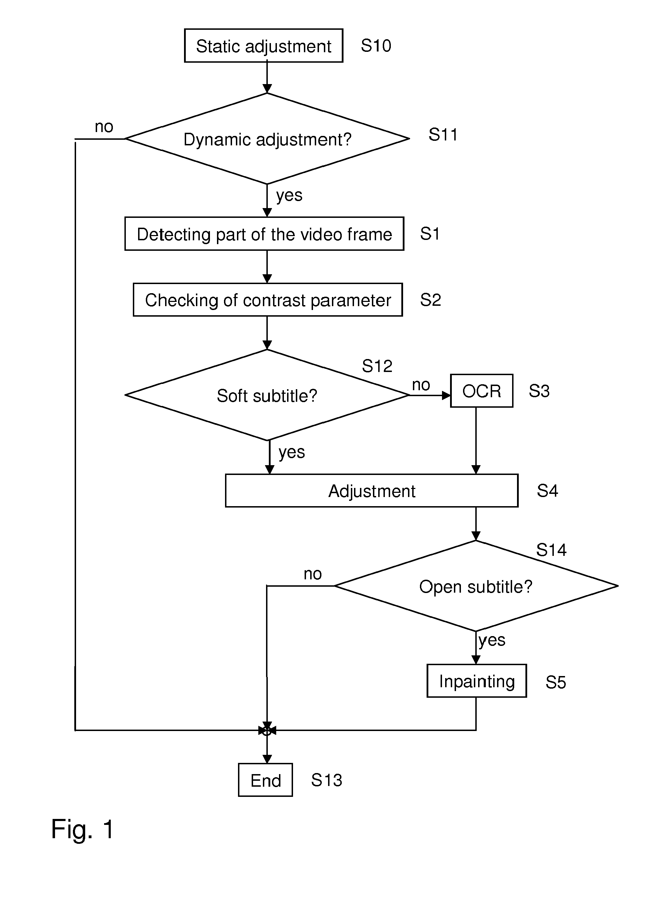

The following sections describe the processing steps (partly optional) that should be performed by a playback device implementing the dynamic adjustments of the invention. Depending on the subtitle/caption type of an A/V content being played back and the subtitle/caption adjustment to be performed, some of these may be skipped, which is also described (compare Fig. 1, details of which are explained later).

Step 1 (S1) - Detection of subtitle/caption components within video frame(s): This step detects which areas of a complete video frame to be displayed, including both the main video content and the subtitles/captions, belong to which subtitle/caption component (character foreground, background, outline and shadow), using Optical Character Recognition (OCR) and related computer vision techniques. The result may be a set of pixel masks each representing the respective subtitle/caption component. The actual subtitle/caption text need not be detected in this step yet as some subtitle/caption adjustments (e.g. color and transparency changes, low-quality digital zoom style font size changes, or low-quality adding or broadening of outlines or shadows) can operate on per-pixel basis. This step is most complex for hard subtitles/captions as the subtitle/caption text must be distinguished from other textual information belonging to the main video content (signs, labels, printed and displayed media, etc.). Approaches to this distinction include (non-exhaustive) the analysis of features like text style, size, position, angle, perspective, contrast and lighting, both in-frame and their inter-frame changes, the latter requiring some buffering and pre-processing of video frames. This distinction is way easier for pre-rendered and soft subtitles/captions as these are provided separately from the main video content, so the playback device can simply compare the complete video frame with the main video content if the subtitles/captions do not inherently provide some kind of subtitle/caption mask (e.g. the fully transparent vs. non-transparent areas of pre-rendered subtitles/captions). This step must in principle be performed for each video frame, but the playback device may use information about an already detected subtitle/caption to simplify the detection of this subtitle/caption in subsequent frames as most subtitles/captions do not change much or at all between frames. For soft subtitles/captions, the playback device may evaluate subtitle/caption timing, positioning and formatting information, either provided by the A/V content or configured within the device, to further simplify the processing for this step.

Step 2 (S2) - Checking of subtitles/captions against the surrounding main video content for readability issues: This step checks whether there is a lack of contrast in luminance and/or color between the detected subtitles/captions and the surrounding main video content of the video frame which makes the subtitles/captions hard to read, according to the parameters configured by the user of the playback device. For example, a subtitle/caption without character background, outline or shadow having a character foreground similar to the surrounding main video content clearly presents a readability issue, but a subtitle/caption without character background but with an outline or shadow may also be hard to read if the outline/shadow is tiny or does not provide enough contrast with the subtitle/caption foreground and the surrounding main video content. The result of this step may be a pixel mask exactly localizing the readability issues, but the playback device may also provide spatially coarser readability issue information if this is sufficient for the spatial granularity of the adjustments supported by the device.

Step 3 (S3) - Recognition of the actual subtitle/caption text: This step performs OCR processing of the detected subtitles/captions to recognize the actual text if this is required for the adjustments to be performed. Furthermore, it is only necessary for hard and pre-rendered subtitles/captions as soft ones already include such textual representation. To save processing resources, the OCR of this step should complement the partial OCR already performed in Step 1 for detecting the subtitle/caption components, typically mainly evaluating the character foreground. This step is only required for subtitle/caption adjustments needing a proper re-rendering of the text, like changes in font type or font or shadow style as well as font size changes or adding or broadening of outlines or shadows if the latter three should be of high quality. Similar to Step 1, the playback device may use information about an already recognized text to simplify the recognition of this text in subsequent frames, maybe relying on information from Step 1 about whether and how the detected subtitles/captions have changed.

Step 4 (S4)- Adjustment of the subtitles/captions: This step actually applies the adjustments to the subtitle/caption formatting. For the dynamic adjustments of the invention, the adjustments are performed if readability issues have been detected in Step 2, to improve the readability of the subtitles/captions. As described above, the kinds of adjustments being performed and their temporal and spatial extend may vary depending on the resources of the playback device and the parameters configured by its user. The results are adjusted subtitles/captions which are superimposed on the main video content to produce an adjusted complete video frame to be displayed.

Step 5 (S5) - Inpainting of the video frame: This step tries to reconstruct the main video content if the subtitle/caption adjustments result in areas within the adjusted complete video frame formerly occluded by the subtitles/captions not being occluded anymore. This is only required for hard subtitles/captions as the full main video content is always available for pre-rendered and soft ones. This step first detects the patches to be reconstructed by comparing the pixels occluded by the original subtitles/captions vs. the adjusted ones from Step 4. Afterwards, it fills in these gaps by analyzing and extrapolating the surrounding main video content. There are some problems with this step: First, the possibility and quality of inpainting depends on the size and spatial distribution of a patch to be inpainted. For example, a long but small scratch is typically easier to inpaint than a compact patch of the same area as the available original content is closer to the content to be reconstructed. Second, inpainting of video content has the inherent problem that differences in inpainting the same patches in subsequent frames can quickly lead to noisy areas within a video, which is quite noticeable and may be disturbing to the viewer if occurring on huge areas. Third, inpainting is quite demanding in computing power so that its real time application required for this step may currently only be feasible on high-end playback devices (computers, gaming consoles, Smart TVs, etc.) if at all. Therefore, the quality of the results of this step, if supported by the playback device, will depend on the amount of inpainting required (e.g. moving a subtitle/caption with opaque character background vs. one with transparent background vs. just changing font type or style of the latter without repositioning) and the resources of the device. If this step cannot be supported, adjustments to hard subtitles/captions should be restricted to those not changing or only increasing the area occluded by the subtitles/captions (e.g. color changes, adding character background, or adding or broadening of outlines or shadows).

Some of the processing steps of the dynamic subtitle/caption adjustments can similarly be used for the static adjustments of the invention. Step 2 does not apply as the static adjustments themselves do not check for readability issues between the subtitles/captions and the main video content. However, as the static adjustments may cause temporary subtitle/caption readability issues, they should be followed by dynamic adjustments to correct these issues. These dynamic adjustments should utilize results of the processing steps already performed for the static adjustments to speed up the processing if possible. For example, some or even all subtitle/caption component masks detected for the static adjustments can be reused for the dynamic ones if the static adjustments do not change the spatial formatting of these components, including taking a spatial offset into account if the static adjustments move the subtitles/captions, and the dynamic adjustment need not recognize the actual subtitle/caption text again if this is already done for the static ones and these do not change the text. For the static adjustments, Step 4 is not triggered by and intended to resolve temporary readability issues. Instead, it simply applies the static adjustments according to the static subtitle/caption adjustment parameters configured by the user of the playback device.

For static adjustments of soft subtitles/captions, none of the further processing steps S1, S3 and S5 is needed as soft subtitles/captions are actively rendered by the playback device. Therefore, the default subtitle/caption formatting parameters, either provided by the A/V content or configured within the device, need only be replaced by the adjustment parameters before rendering the subtitles/captions and superimposing them on the main video content in Step 4. The playback device should now perform the dynamic adjustments of the invention on the statically adjusted complete video frames as described above, using the statically adjusted subtitle/caption timing, positioning and formatting information instead of the original one for its processing in Step 1.

For static adjustments of pre-rendered subtitles/captions, Step 1 must be performed to detect the subtitle/caption components within video frame(s), and Step 3 must be performed to recognize the actual subtitle/caption text if required for the adjustments to be applied. Afterwards, the static adjustments are applied as configured and superimposed on the main video content in Step 4. Finally, the playback device should perform the dynamic adjustments of the invention on the statically adjusted video content, using any information from the static adjustments which may simplify the dynamic ones.

For static adjustments of hard subtitles/captions, the processing of Step 1, Step 3 and Step 4 is the same as for the pre-rendered subtitles/captions. Afterwards, Step 5 must be performed if inpainting is required for the adjustments having been applied. Finally, the dynamic adjustments should be performed as described for the pre-rendered subtitles/captions.

Fig. 1 shows an exemplary embodiment of the present invention. The method of displaying textual information together with a video frame on a playback device starts with an optional step S10 for static adjustment. Prior to playback, the format of the subtitle or other textual information can be adjusted without relation to any content to be played back. After such static adjustment, a dynamic adjustment could be performed. This must be decided at step S11. If dynamic adjustment is not desired, the process ends at step S13. Otherwise, if dynamic adjustment is desired, detection of a first part of the video frame is performed in step S1, the first part spatially corresponding to a component of a graphical representation of the textual information to be displayed on the playback device. After detecting the first part, a contrast parameter of the component of the graphical representation is checked against a spatially corresponding second part of the video frame in step S2. Optionally, the processing can be finished (step S13), if the contrast parameter exceeds a pre-given value.

Immediately afterwards, there might be an optional decision step S12 concerning the distinction whether a soft subtitle or a pre-rendered subtitle is provided, for instance. If a pre-rendered subtitle or open subtitle is provided, an optional OCR step S3 can be necessary. Otherwise, if a soft subtitle is provided, no OCR is necessary and an adjustment according to step S4 (see step 4 above) will be performed. After this adjustment S4, the process continues with discrimination S14. In discrimination step S14, it is decided whether an open subtitle is provided or not. If not, the process ends at step S13. However, if an open subtitle is provided, an inpainting step S5 is performed in order to reconstruct parts of the video frame originally being hidden by the open subtitle. After the inpainting step S5, the process ends at S13. The steps between S11 and S13 can be performed for each video frame or each temporal change of contrast between the component of the subtitle and the corresponding second part of the video frame. Further choice options may be added at any of the above steps.

In summary, there are two major modes of adjustment and three major types of subtitles. The two modes of adjustment of subtitle/caption formatting are:
- Dynamic adjustments: automatic detecting and resolving of readability issues caused by temporarily insufficient contrast in luminance and/or color between subtitles/captions and surrounding main video content.
- Static adjustments: long-term adjustments of subtitle/ Caption formatting according to user preferences (may also address long-term readability issues like viewing distance, sharpness of vison, or color perception); not regarding surrounding main video content. Static adjustments should be followed by dynamic adjustments to address temporary readability issues potentially caused by the static adjustments.

The three major types of subtitles/captions are:
- Hard subtitles/captions: fully integrated into video frames, cannot be switched off;
- Pre-rendered subtitles/captions: provided as graphics overlaying the video frames, switchable;
- Soft subtitles/captions: actively rendered from special text, presentation timing, and maybe formatting information; switchable.

These variables of adjustment result in 6 major variants (dynamic/static adjustments of hard/pre-rendered/soft subtitles/captions) of which one, static adjustments of soft subtitles/captions, already is state of the art.

The following Table 1 shows different kinds of dynamic subtitle/caption adjustments and their applicability.

| Kind of subtitle/caption adjustment | Use for dynamic adjustments | Dynamic adjustment of temporal parts of subtitle/caption | Dynamic adjustment of spatial parts of subtitle/caption |
|---|---|---|---|
| Color or transparency changes of text foreground, background, outlines, or shadows | Suitable | Possible | Possible |
| Adding or broadening of text outlines or shadows, without re-spacing | Suitable | Possible | Possible |
| Adding or broadening of text outlines or shadows, with re-spacing | Possible | Unfavorable | Possible, adjustment of full lines preferred |
| Change of font type, style, or size | Unfavorable | Unfavorable | Possible, adjustment of full lines preferred |
| Change of text orientation or position | Unfavorable | Unacceptable | Unacceptable |

All these kinds of adjustments, and maybe even more like change of shadow style or text animations (scrolling, fade-in, fade-out, etc.), may be used for the static adjustments.

The above described processing steps and their application can be summarized as follows:
Step 1 (S1) - Detection of subtitle/caption components within video frame(s): assumes pixel-accurate masking of subtitle/caption components (character foreground, background, outline, and shadow).
Step 2 (S2) - Checking of subtitles/captions against surrounding main video content for readability issues: checks for lack of contrast in luminance and/or color.
Step 3 (S3) - Recognition of actual subtitle/caption text: results in textual representation (e.g. UTF).
   This step is only required for subtitle/caption adjustments needing a proper re-rendering of the text (e.g. changes in font type; changes in font or shadow style; or font size changes or adding or broadening of outlines or shadows, the latter three if of high quality).
Step 4 (S4) - Adjustment of subtitles/captions: applies subtitle/caption formatting adjustments.
   - Dynamic adjustment are triggered by detected subtitle/caption readability issues and intended to resolve these.
   - Static adjustments are unconditionally applied according to user-configured parameters.
Step 5 (S5) - Inpainting of the video frame: reconstructs the main video content.
   This step is only required for subtitle/caption adjustments resulting in video frame areas formerly occluded by the subtitles/captions not being occluded anymore.

The following Table 2 shows the above mentioned six major variants of subtitle/caption adjustment with their processing steps, assuming that an adjustment is actually performed.

| Applied processing steps | Dynamic adjustments | Static adjustments |
|---|---|---|
| Hard subtitles/captions | 1, 2, (3), 4, (5) | 1, (3), 4, (5) |
| Pre-rendered subtitles/captions | 1, 2, (3), 4 | 1, (3), 4 |
| Soft subtitles/captions | 1, 2, 4 | 4 |

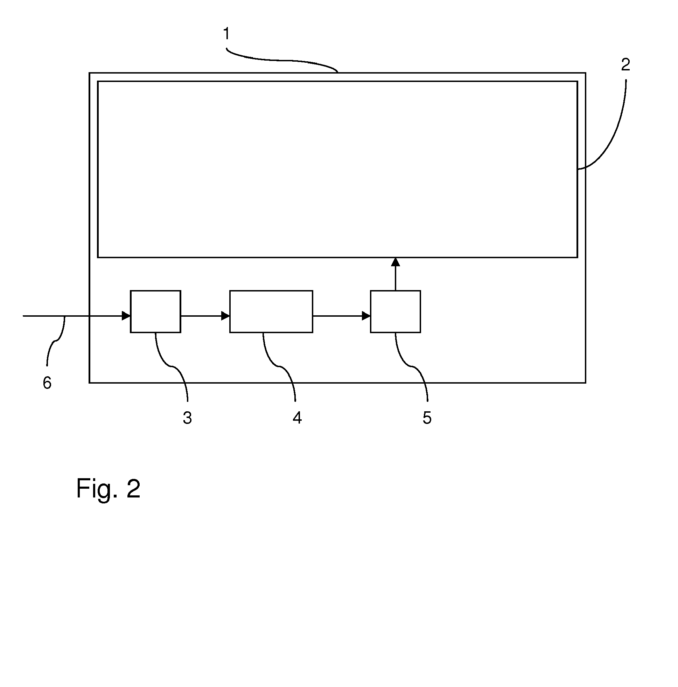

Processing steps in parentheses indicate dependencies on the performed kind of subtitle/caption adjustment (see above). Fig. 2 shows a concrete implementation of a playback device 1 according to the present invention. This playback device 1 may include a video screen 2 for displaying a video frame including subtitles, for instance. Furthermore, the playback device 1 includes detecting means 3 for detecting a first part of the video frame to be displayed on the playback device, wherein the first part spatially corresponds to a component of a graphical representation of the textual information to be displayed on the playback device. The output signal of the detecting means is delivered to processing means 4 for optionally checking a contrast parameter of the component of the graphical representation against a spatially corresponding second part of the video frame. The output signal of the processing means 4 is input to adjusting means 5 for adjusting at least the component of the graphical representation in accordance with a value of a formatting parameter. The output of the adjusting means is used for controlling the video screen 2. During operation an external video signal 6 is input to detecting means 3 and it is further optionally processed by the processing means 4. Afterwards it is further processed by adjusting means 5.

As discussed above, different playback devices implementing the invention may support different kinds of subtitle/caption adjustments according to their resources, the type of subtitles/captions to be adjusted and types of adjustments (static/dynamic). However, a device generally supporting a specific adjustment may sometimes not be able to perform this adjustment due to a temporary resource shortage or an exceptionally demanding sequence within the A/V content being played back (e.g. subtitles/captions with a very long display duration making it impossible to find a dynamic adjustment suitable for this full duration, or hard subtitles/captions occluding so much of the main video content that its inpainting is impossible on repositioning of the subtitles/captions). In this case, the device may temporarily fall back to adjustments requiring fewer resources (maybe using an alternative set of configuration information as described above) or even totally skip the adjustments. If such emergency measures have to be taken often or for an extended time, the user of the device may be notified that the current configuration of the subtitle/caption adjustment functionality is too demanding and may be advised to choose a more suitable one, in general or for the A/V content being played back only.

### References

[1] US 2014/0071343 A
[2] US 2009/0027552 A
[3] JP 2009/088634 A

## Claims

1. Method of displaying textual information together with a video frame on a playback device,
**characterized by** automatically performing:
- detecting (S1) a first part of the video frame to be displayed on the playback device (1), the first part belonging to a component of a graphical representation of the textual information to be displayed on the playback device (1);
- adjusting (S4) at least the component of the graphical representation in accordance with a value of a formatting parameter.

2. Method according to claim 1, wherein the value of the formatting parameter is set in advance.

3. Method according to claim 1, wherein the step of detecting a first part is followed by detecting a second part of the video frame surrounding the first part and not belonging to the component of the graphical representation, and the method further includes checking (S2) a contrast parameter of the first part against the second part, wherein the formatting parameter is the contrast parameter, and wherein the step of checking (S2) includes dynamically determining a value of the contrast parameter and the adjusting is performed such that each value of the contrast parameter exceeds a pre-given value.

4. Method according to one of the preceding claims, wherein the textual information is an open subtitle or a closed subtitle.

5. Method according to claim 4, wherein the closed subtitle is a pre-rendered subtitle or a soft subtitle.

6. Method according to one of claims 3 to 5, wherein the contrast parameter relates to luminance or chrominance.

7. Method according to one of the preceding claims, wherein the component of the graphical representation relates to a background of a character, a foreground of a character, an outline of a character or a shadow of a character.

8. Method according to one of the preceding claims, further including an OCR processing.

9. Method according to one of the preceding claims, wherein the step of adjusting (S4) is followed by inpainting (S5) of the video frame.

10. Method according to one of the preceding claims, wherein the component of the graphical representation of the textual information is a full subtitle, a single line of a subtitle, a single character of a subtitle or a part of a character of a subtitle.

11. Method according to one of claims 3 to 10, wherein the step of adjusting (S4) is only performed if the contrast parameter is lower than a level configurable by a user of the playback device.

12. Method according to one of claims 3 to 11, wherein the formatting parameter for the graphical representation is set manually (S10) before the steps of checking and adjusting.

13. Method according to one of claims 3 to 12, wherein the step of checking (S2) is performed repeatedly for a number of video frames of a pre-defined period of time or a pre-defined number of video frames, and the step of adjusting is performed once for the whole number of said frames.

14. Method according to claim 13, wherein the pre-defined period of time corresponds to the whole time of displaying the textual information.

15. Method according to one of claims 3 to 14, wherein the step of checking (S2) the component of the graphical representation is automatically repeated for different types of formatting parameters.

16. Playback device (1) for displaying textual information together with a video frame,
**characterized by**:
- detecting means (3) for detecting a first part of the video frame to be displayed on the playback device (1), the first part belonging to a component of a graphical representation of the textual information to be displayed on the playback device (1);
- adjusting means (5) for adjusting at least the component of the graphical representation in accordance with a value of a formatting parameter.
